# EUROPÄISCHE PATENTSCHRIFT

(11) **EP 2 271 425 B1**
(45) Veröffentlichungstag und Bekanntmachung des Hinweises auf die Patenterteilung: **03.10.2018**
(21) Anmeldenummer: 09738004.2
(22) Anmeldetag: 15.04.2009
(51) Int. Cl.: B01J 23/63, B01J 23/89, B01J 37/02, C10J 3/84, C10K 1/34

(54) **VERFAHREN ZUR KATALYTISCHEN VERRINGERUNG DES TEERGEHALTS IN GASEN AUS VERGASUNGSPROZESSEN UNTER VERWENDUNG EINES KATALYSATORS AUF EDELMETALLBASIS**
METHOD FOR THE CATALYTIC REDUCTION OF THE TAR CONTENT IN GASES FROM GASIFICATION PROCESSES USING A CATALYST BASED ON NOBLE METALS
PROCÉDÉ POUR RÉDUIRE PAR VOIE CATALYTIQUE LA TENEUR EN GOUDRONS DE GAZ ISSUS DE PROCESSUS DE GAZÉIFICATION AU MOYEN D'UN CATALYSEUR À BASE DE MÉTAUX NOBLES

(30) Priorität: 28.04.2008 DE 102008021081
(43) Veröffentlichungstag der Anmeldung: 12.01.2011
(73) Patentinhaber: Clariant Produkte (Deutschland) GmbH, 65929 Frankfurt am Main (DE)
(72) Erfinder: ANFANG, Georg, 83620 Vagen (DE); MODL, Norbert, 83043 Bad Aibling (DE)
(74) Vertreter: Clariant Produkte (Deutschland) GmbH
(86) Internationale Anmeldenummer: PCT/EP2009/054434
(87) Internationale Veröffentlichungsnummer: WO 2009/132960

(56) Entgegenhaltungen:
- WO-A1-2007/116121
- US-A1- 2005 255 995
- US-A1- 2006 182 679
- M.A. Gerber: "Review of Novel Catalysts for BiomassTar Cracking and Methane Reforming" Pacific Northwest National Laboratory, [Online] Oktober 2007 (2007-10), XP002584397 Gefunden im Internet: URL:http://www.pnl.gov/main/publications/e xternal/technical_reports/PNNL-16950.pdf> [gefunden am 2010-05-27]
- K. TOMISHIGE ET AL: "Catalyst performance in reforming of tar derived from biomass over noble metal catalysts" GREEN CHEMISTRY, Bd. 5, 2003, Seiten 399-403, XP008122906

## Beschreibung

Die Erfindung betrifft ein Verfahren zur katalytischen Verringerung des Teergehalts in Gasen aus Vergasungsprozessen.

Unter einem Vergasungsprozess ist im Rahmen der vorliegenden Erfindung insbesondere die thermo-chemische Vergasung von kohlenstoffhaltigen Ausgangsmaterialien zu verstehen. Bevorzugt sind darunter Biomasse-Vergasungsprozesse zu verstehen. Die im Vergaser erzeugten Brenngase können zur Stromerzeugung mittels Verbrennungskraftmaschinen (z. B. Gasmotor) oder in Brennstoffzellen genutzt werden. Außerdem besteht die Möglichkeit, die erzeugten Brenngase als Synthesegas für die Synthese von flüssigen Kraftstoffen wie z. B. Methanol, Diesel oder Benzin zu verwenden.

Teer wird meistens als unerwünschtes Nebenprodukt in thermochemischen Vergasungsprozessen erzeugt und ist eine komplexe Mischung aus organischen Verbindungen. Im Rahmen der vorliegenden Erfindung werden unter Teer Mischungen zyklischer und polyzyklischer aromatische Kohlenwasserstoffe verstanden. Insbesondere weisen diese Verbindungen ein Molekulargewicht von mehr als etwa 78 g/mol auf (Molekulargewicht von Benzol).

So entstehen beispielsweise bei der Vergasung von Biomasse temperatur- und prozessabhängig unterschiedliche Mengen an Gasen, Teeren und Koks. Die Menge und die genaue Zusammensetzung der Teerverbindungen hängen vorrangig von der verwendeten Biomasse, den Vergasungsbedingungen und dem Vergasertyp ab. Die DE102004024672A1 beschreibt beispielsweise den Zusammenhang bei der Gaserzeugung in Festbettvergasern. Dabei werden zwei Grundprinzipien unterschieden: Die Gegenstromvergasung ist zwar vergleichsweise technisch einfach, produziert jedoch brennbare Nutzgase mit extrem hohen Teergehalten. Bei der technisch anspruchsvolleren Gleichstromvergasung können zwar Nutzgase mit geringerem Teergehalt erzeugt werden, jedoch ist das Upscaling dieser Anlagen entsprechend schwieriger. Auch bei anderen Vergasertypen wie z. B. bei Wirbelschichtvergasern werden Teere erzeugt. Der Teergehalt im Rohgas kann beispielsweise zwischen 1 und 100 g/m³ variieren (Devi L., Nair S.A., Pemen A.J.M. et al., Tar Removal from Biomass Gasification Processes, Biomass and Bioenergy: New Research, 2006, pp. 249-274).

Unterhalb von 300 bis 400°C liegen die meisten Teere in kondensierter oder resublimierter Form vor. Dadurch werden Probleme durch Verkokung und Kondensierung auf den verschiedenen Material- und/oder Katalysatoroberflächen verursacht.

Daher ist es notwendig, den Teergehalt in durch Vergasungsprozesse erhaltenen Gasen zu verringern. Dadurch kann eine weitere Verwendung der erhaltenen Gase, beispielsweise als Synthesegas oder in Brennstoffzellen, ermöglicht werden.

Die Entfernung von Teer aus durch Vergasungsprozesse erhaltenen Gasen kann grundsätzlich in Primär- und Sekundärmaßnahmen kategorisiert werden: Als Primärmaßnahme bezeichnet man Techniken, die bereits während der Vergasung angewendet werden. Sekundärmaßnahmen sind dem Vergaser nachgeschaltet. Beide Verfahren beruhen auf physikalischen oder chemischen Methoden.

Bei der physikalischen Teerentfernung werden beispielsweise Wäscher oder Keramikfilter angewandt. Diese Methoden sind aber meist energieintensiv und erfordern die Installation von zusätzlichem Equipment.

Unter chemischer Teerentfernung versteht man vorrangig thermisches Cracken oder katalytische Konversion der Teere. Beim thermischen Cracken sind sehr hohe Temperaturen von mindestens 1000°C erforderlich. Jess, A. (1996) beschreibt in "Mechanisms and kinetics of thermal reactions of aromatic hydrocarbons from pyrolysis of solid fuels", Fuel 75, 1441-1448, dass eine vollständige Konversion von Naphthalen ähnlichen Molekülen sogar erst bei Temperaturen von 1400°C geschieht. Neeft, J.P.A., Knowef, H.A.M., Onaji, P. (1999) weisen in "Behaviour of tar in biomass gasification systems. Tar related problems and their solutions." Novem, The Netherlands, Report No. 9919, darauf hin, dass eine Folge der hohen Temperaturen Rußerzeugung sein kann. Das Hauptproblem des thermischen Crackens ist jedoch der erhöhte Energieverbrauch und der damit verbundene Wirkungsgradverlust einer Vergasungsanlage.

Bei der katalytischen Teerentfernung wird der Teer mittels eines Katalysators bei z. B. 800°C bis 900°C umgesetzt und zerstört. Der Katalysator kann direkt im Vergasungsreaktor oder in einem nachgeschalteten externen Reaktor eingesetzt werden. Geeignete Katalysatoren sind beispielsweise nichtmetallische Katalysatoren wie Dolomite, Zeolithe und Kalkspat. Geeignete metallische Katalysatoren basieren auf Ni, Ni/Mo, Ni/Co/Mo, NiO, Pt oder Ru (Corella, Jose, Orio, Alberto and Aznar, Pilar, Biomass Gasification with Air in Fluidized Bed: Reforming of the Gas Composition with Commercial Steam Reforming Catalysts, Ind. Eng. Chem. Res., 1998, 4617-4624; Corella, Jose, Orio, Alberto and Toledo, Jose-Manuel., Biomass Gasification with Air in a Fluidized Bed: Exhaustive Tar Elimination with Commercial Steam Reforming Catalysts, Energy Fuels, 1999, 702-709; Corella, J., Caballero, M. A., Aznar, M. P. and Gil, J., Biomass gasification with air in fluidized bed: hot gas cleanup and upgrading with steam-reforming catalysts of big size, 1999, 933-938; Caballero, Miguel A., Corella, Jose, Aznar, Maria-Pilar and Gil, Javier., Biomass Gasification with Air in Fluidized Bed. Hot Gas Cleanup with Selected Commercial and Full-Size Nickel-Based Catalysts, 2000, 1143-1154; Delgado, Jesus, Aznar, Maria P. and Corella, Jose., Biomass Gasification with Steam in Fluidized Bed: Effectiveness of CaO, MgO, and CaO-MgO for Hot Raw Gas Cleaning, Ind. Eng. Chem. Res., 1997, 1535-1543; Delgado, Jesus, Aznar, Maria P. and Corella, Jose., Calcined Dolomite, Magnesite, and Calcite for Cleaning Hot Gas from a Fluidized Bed Biomass Gasifier with Steam: Life and Usefulness, Ind. Eng. Chem. Res., 1996, 3637-3643).

Diese Katalysatoren haben den Vorteil, dass sie in der Lage sind, neben Teer auch den im Produktgas enthaltenen Ammoniak zu zerstören. Allerdings ist die Lebensdauer dieser Katalysatoren, insbesondere in der Biomassevergasung, noch nicht ausreichend. Ferner sind sie schwefelempfindlich und neigen schnell zu Desaktivierung durch Verkokung, insbesondere wenn die zu reinigenden Gase hohe Teerkonzentrationen (> 2 g/m³_{N}) aufweisen.

Die WO 2007/116121 A1 beschreibt ein Verfahren zur Reformierung von Gas, welches teerartige Verunreinigungen enthält. Dem Gas wird zunächst Sauerstoff zugeführt. Diese Mischung wird anschließend mit einem Festkörperkatalysator kontaktiert, wobei die eigentliche Reformierung in einem zweistufigen Prozess stattfindet, bei dem die Gasmischung in einer ersten Stufe mit einem Katalysator auf Zirkoniumbasis und in einer zweiten Stufe mit einem Metallkatalysator, bestehend aus metallischem Nickel oder einem Edelmetall wie Pt, Pd, Rh oder Ru, kontaktiert wird.

Die US 2005/255995 A1 offenbart ein Verfahren zur Verringerung des Teergehalts in Gasen aus einem Vergasungsprozess aus kohlenstoffhaltigen Ausgangsmaterialien, umfassend das Kontaktieren mindestens eines Teils des aus einem Vergasungsprozess erhaltenen Gases mit einem edelmetallhaltigen Katalysator, wobei der edelmetallhaltige Katalysator einen Edelmetall, ausgewählt aus der Gruppe bestehend aus Al, Ag, Au, Ca, Co, Cr, Cu, Eu, Fe, Gd, Ir, La, Mg, Mn, Ni, Pr, Pt, Ru, Rh, Sn, Zn und deren Mischungen, umfasst und wobei das aus einem Vergasungsprozess erhaltene Gas vor dem Inkontaktbringen mit dem edelmetallhaltigen Katalysator nicht mit einem Katalysator auf Zirkoniumbasis in Kontakt gebracht wird.

Es ist wünschenswert, ein vereinfachtes Verfahren zur katalytischen Verringerung des Teergehalts in Gasen aus Vergasungsprozessen bereitzustellen.
Aufgabe der vorliegenden Erfindung ist die Bereitstellung eines Verfahrens zur katalytischen Verringerung des Teergehalts in Gasen aus Vergasungsprozessen.
Diese Aufgabe wird erfindungsgemäß durch ein Verfahren gelöst, umfassend das Kontaktieren mindestens eines Teils des aus einem Vergasungsprozess erhaltenen Gases mit einem beispielsweise auf Schüttgut oder auf Monolithstruktur aufgebrachten edelmetallhaltigen Katalysator, wobei der edelmetallhaltige Katalysator wenigstens ein Edelmetall, ausgewählt aus der Gruppe, bestehend aus Pt, Rh, und Ir, umfasst, unter der Bedingung, dass im Falle von Pt dieses in Kombination mit Rh oder Ni verwendet wird, dass im Falle von Rh dieses in Kombination mit einem weiteren Edelmetall verwendet wird, und dass im Falle von Ir dieses in Kombination mit dem Promotor Ceroxid verwendet wird, und wobei das aus einem Vergasungsprozess erhaltene Gas vor dem Inkontaktbringen mit dem edelmetallhaltigen Katalysator nicht mit einem Katalysator auf Zirkoniumbasis in Kontakt gebracht wird. Die Edelmetalle werden im Folgenden auch als Aktivkomponenten bezeichnet.

Es wurde überraschend gefunden, dass bei Verwendung des erfindungsgemäßen Verfahren, sehr gute Resultate im Hinblick auf die Verringerung des Teergehalts von Gasen aus Vergasungsprozessen erhalten werden. Ferner zeichnen sich die im erfindungsgemäßen Verfahren zu verwendenden Katalysatoren durch eine hohe Toleranz gegenüber Schwefelwasserstoff aus, welcher häufig als weitere Verunreinigung in den zu behandelnden Gasen vorliegt. Im Gegensatz zu der Lehre aus der WO 2007/116121 A1, wonach ein mindestens dreistufiges Verfahren erforderlich ist, umfassend einen Schritt zur Behandlung mit Sauerstoff, einen (Pre)reformierungsschritt unter Verwendung eines Katalysators auf Zirkoniumbasis und einen Reformierungsschritt unter Verwendung eines Metallkatalysator, kann nach dem erfindungsgemäßen Verfahren auf einfache und effiziente Weise unter Verwendung eines edelmetallhaltigen Katalysators der Teergehalt von Vergasungsgasen wirkungsvoll reduziert werden.

Der erfindungsgemäße einzusetzende edelmetallhaltige Katalysator enthält ein, zwei oder mehr Edelmetalle, ausgewählt aus der Gruppe, bestehend aus Pt, Rh, und Ir, umfasst, unter der Bedingung, dass im Falle von Pt dieses in Kombination mit Rh oder Ni verwendet wird, dass im Falle von Rh dieses in Kombination mit einem weiteren Edelmetall verwendet wird, und dass im Falle von Ir dieses in Kombination mit dem Promotor Ceroxid verwendet wird. Bevorzugt umfasst der edelmetallhaltige Katalysator eine Kombination von Pt und Rh, wobei das Verhältnis von Pt zu Rh in einer beliebigen Proportion auftreten kann; vorzugsweise wird ein Gewichtsverhältnis von Pt zu Rh von 1 : 1 bis 6 : 1, besonders bevorzugt von 2 : 1 bis 4 : 1, eingesetzt. Weiterhin kann der Katalysator als alleinige Aktivkomponente beispielsweise Pd, Ir, Os oder Re umfassen. Rhodium wird bevorzugt als Kombination mit einem weiteren Edelmetall wie beispielsweise Pt oder Ir oder zusammen mit Ni eingesetzt. Ebenso als Aktivkomponente geeignet ist Ni, das mit einem oder mehreren Edelmetallen dotiert ist, vorzugsweise mit Platin, Rhodium, Ruthenium oder einer Mischung davon. Vorzugsweise wird ein Ni- zu Edelmetall-Gewichtsverhältnis von 5 : 1 zu 20 : 1 verwendet, besonders bevorzugt von 7 : 1 zu 13 : 1.

Der Katalysator kann auch im Falle von Pt und Rh weitere Bestandteile, wie Promotoren für die Aktivkomponenten wie z.B. Ceroxid, aufweisen.
Die Edelmetalle können direkt auf Schüttgut aufgebracht werden, z. B. auf einfache α-Al₂O₃-Träger oder andere hochtemperaturstabile Träger wie Calcium-Aluminat, Hexaaluminate, oder ähnliche keramische Trägersysteme, die beispielsweise vorher zu Kugeln, Tabletten, Extrudaten, Triholes oder anderen Formen geformt wurden. Dabei sind sowohl Al₂O₃ als auch andere Oxide wie Ce-Oxide, Zr-Oxide, Ti-Oxide, La-Oxide sowie Mischungen aus den Oxiden und gegebenenfalls zusätzlichen Promotoren denkbar. Über die Konzentration und Temperatur der Imprägnierlösung, die Porosität des Trägers und den Imprägnierprozess selbst können die Eindringtiefe und die Konzentration der katalytisch aktiven Edelmetalle auf dem Träger gesteuert werden. Der erfindungsgemäße Katalysator kann durch Imprägnierung eines Trägers mit einer wässrigen Lösung von Salzen des gewünschten Edelmetalls hergestellt werden. Der imprägnierte Katalysator wird dann getrocknet und kalziniert, gegebenenfalls werden diese Schritte ein- oder mehrmals wiederholt.
Ausserdem können sogenannte Trägerkatalysatoren hergestellt werden, bei denen die katalytisch aktiven Komponenten in hochdisperser Form auf Trägermaterialien aufgebracht werden. Zu diesem Zweck werden Trägermaterialien verwendet, die eine große spezifische Oberfläche zur Aufnahme der katalytisch aktiven Komponenten besitzen. Es handelt sich um feinteilige, das heißt pulverförmige, temperaturstabile Metalloxide - im Folgenden bezeichnet als Washcoat. Typische Washcoat-Hauptbestandteile sind Aluminiumoxide, Ceroxide, Zirkonoxide und andere Metalloxide. Zusätzliche Promotoren zur Stabilisierung der hohen Oberflächen oder zur Unterdrückung bzw. Promotion von Nebenreaktionen können ebenfalls vorhanden sein. Typischerweise werden Aluminiumoxide mit BET-Oberflächen von etwa 50 bis etwa 250 m²/g verwendet.

Die Trägermaterialien werden in Form einer Beschichtung auf inerte Tragkörper - sogenannte Wabenkörper - aus Keramik (z. B. Cordierite) oder Metall aufgebracht. Zum Beschichten der Wabenkörper mit den Trägermaterialien werden die Trägermaterialien beispielsweise in Wasser dispergiert und beispielsweise durch einen Mahlvorgang homogenisiert. Die Wände der Wabenkörper werden dann durch ein- oder mehrmaliges Eintauchen in die Beschichtungsdispersion mit nachfolgendem Trocknen und Kalzinieren beschichtet. Bei dieser Vorgehensweise können die katalytisch aktiven Komponenten zu verschiedenen Zeitpunkten auf die spezifische Oberfläche der Trägermaterialien aufgebracht werden. Beispielsweise können die katalytisch aktiven Komponenten erst nach Beschichten der Wabenkörper mit der Dispersionsbeschichtung durch Eintauchen der beschichteten Wabenkörper in eine wässrige Lösung von löslichen Vorstufen der katalytisch aktiven Komponenten auf den Trägermaterialien abgeschieden werden. Alternativ können die katalytisch aktiven Komponenten in einem dem Anfertigen der Dispersionsbeschichtung vorgeschalteten Arbeitsschritt auf die pulverförmigen Trägermaterialien aufgebracht werden.

In einer bevorzugten Ausführungsform werden die Aktivkomponenten auf Trägermaterialien, umfassend ein Mischoxid, umfassend Ceroxid (CeOₓ),
Lanthanoxid (La₂O₃), Aluminiumoxid (Al₂O₃), Yttriumoxid (Y₂O₃), Titanoxid (TiO₂), Zirkonoxid (ZrO₂), Siliciumoxid (SiO₂) oder Mischungen davon, aufgetragen. Das Trägermaterial-Mischoxid kann z. B. durch Imprägnierung von Aluminiumoxid mit den Nitratsalzen der jeweiligen anderen Metallen und anschließender Kalzinierung hergestellt werden.

Das Trägermaterial wird zuvor wie beschrieben z. B. auf monolithische Cordierit-Waben beschichtet, getrocknet und kalziniert; in einem oder mehreren weiteren Imprägnier-, Trocken- und Kalzinierschritten werden die Aktivkomponenten darauf abgeschieden. Die monolithischen Träger mit Wabenstruktur sind dem Fachmann bekannt und werden z. B. in der Automobilindustrie eingesetzt. Beispiele zu verschiedenen monolithischen Trägern sind in Handbook of Heterogeneous Catalysis 4 - Environmental Catalysis, Seiten 1575 - 1583 beschrieben. Andere geeignete Verfahren zum Aufbringen der Aktivkomponenten auf die Träger sind Imprägnieren, Sprühen, lonenaustausch, Eintauchen und alle anderen in der Literatur beschriebenen Techniken.

Die in Rahmen der Erfindung zu verwendenden Katalysatoren sind gegenüber Schwefelverbindungen, die meistens im zu reinigenden Gas enthalten sind, tolerant, d.h. die Aktivität des Katalysators ist im Vergleich zu einem Gasstrom ohne Schwefel zwar geringer, jedoch erfolgt keine vollständige Desaktivierung.

Das im Rahmen des erfindungsgemäßen Verfahrens zu behandelnde Gas umfasst üblicherweise als Hauptkomponenten Kohlenmonoxid, Kohlendioxid, Methan, Wasserstoff, Wasserdampf und Stickstoff. Es enthält ferner Teerverbindungen und typischerweise außerdem geringe Mengen an weiteren Verunreinigungen wie beispielsweise Ammoniak oder Schwefelwasserstoff. Als Vergasungsmedium im Vergasungsprozess können dabei Wasserdampf, Sauerstoff oder andere sauerstoffhaltige Gase wie z. B. Luft dienen. Je nach verwendetem Vergasungsverfahren können noch bestimmte Mengen des Vergasungsmediums im zu behandelnden Gas vorhanden sein.

Das erfindungsgemäße Verfahren wird zwischen der Prozessstufe der Brenngaserzeugung (thermochemische Vergasung) und der Brenngasnutzung (z. B. Gasmotor, Gasturbine, Brennstoffzelle, u.a.) in Form einer Verfahrensstufe, bei der die Teerverbindungen weitestgehend aus dem Gas entfernt werden, durchgeführt. Dabei können optional vor der katalytischen Teerentfernungsstufe staub- und/oder kohlenstoffhaltige Feststoffe aus dem Gas abgetrennt werden, beispielsweise durch physikalische Trennmethoden wie Zyklone, Filter, Wäscher, Umlenkungen oder ähnliches und/oder andere Verunreinigungen wie z. B. Schwefelverbindungen nach Abkühlen des Gases nach dem Katalysator beispielsweise durch adsorptive Abtrennung der Hauptschwefelkomponente H₂S auf ZnO CuO/ZnO oder Aktivkohle abgetrennt werden. Ferner kann, bevor mindestens ein Teil des aus dem Vergasungsprozess erhaltenen Gases direkt mit dem vorstehend beschriebenen edelmetallhaltigen Katalysator, der mindestens zwei Edelmetalle enthält, in Kontakt gebracht wird, optional eine Sauerstoffanreicherung des Gases, wie in der WO 2007/116121 A1 beschrieben, vorgenommen werden. Falls vor der katalytischen Teerentfernungsstufe keine Staubentfernung vorgenommen wird, werden vorzugsweise relativ grobe Wabenkörper benutzt (mit z. B. 100 cpsi (cells per square inch) statt 400 cpsi), um Verbackungen des Wabeneintritts und der Wabenkanäle zu verhindern.

Beim erfindungsgemäßen Verfahren wird das zu behandelnde Gas vor dem Inkontaktbringen mit dem edelmetallhaltigen Katalysator nicht mit einem Katalysator auf Zirkoniumbasis behandelt. Vorzugsweise erfolgt die Behandlung des aus einem Vergasungsprozess erhaltenen Gases unter Verwendung nur eines Katalysators, des erfindungsgemäßen edelmetallhaltigen Katalysators, in einer Stufe (Reformierungsstufe). Die Durchführung eines zweistufigen Reformierungsverfahrens unter Verwendung von zwei verschiedenen Katalysatoren ist ebenfalls denkbar, jedoch darf der erste Katalysator kein Katalysator auf Zirkoniumbasis sein. Unter einen Katalysator auf Zirkoniumbasis fallen insbesondere Zirkoniumoxidkatalysatoren, gegebenenfalls geträgert, gegebenenfalls in Kombination mit einem weiteren Metalloxid wie Aluminiumoxid.

Nach dem erfindungsgemäßen Verfahren kann das Kontaktieren des zu behandelnden Gases mit dem edelmetallhaltigen Katalysator entweder direkt im Vergasungsreaktor oder in einem externen Reaktor vorgenommen werden. Im Rahmen der Erfindung wird mindestens ein Teil des aus einem Vergasungsprozess erhaltenen Gases mit dem edelmetallhaltigen Katalysator in Kontakt gebracht. Das Inkontaktbringen erfolgt insbesondere durch Leiten des Gasstromes durch oder über den Katalysator. Nach einer bevorzugten Ausführungsform wird das gesamte aus einem Vergasungsprozess erhaltene Gas nach dem erfindungsgemäßen Verfahren behandelt.

In Anwesenheit der katalytischen Oberflächen werden die Teerverbindungen durch chemische Reaktion mit anderen Gasbestandteilen in kleinere Moleküle gespalten. Die im Vergasungsreaktor gebildeten Teere werden dabei gemäß nachstehender Reaktionsgleichungen in die Nutzgase CO und H₂ chemisch umgewandelt, d.h. katalytisch reformiert (Gleichung 1 und 2). CₙHₘ steht dabei für teerartige Verbindungen. Ist im Gas noch Sauerstoff enthalten (z. B. aus dem Vergasungsmedium oder auch durch separate Zugabe), können auch Partial- (3) oder Totaloxidationreaktionen (4) auftreten:

CₙHₘ + n H₂O ↔ n CO + (n+m/2) H₂ (1)

CₙHₘ + n CO₂ ↔ 2n CO + (m/2) H₂ (2)

CₙHₘ + n/2 O₂ ↔ n CO + m/2 H₂ (3)

CₙHₘ + (n+m/4) O₂ ↔ n CO₂ + m/2 H₂O (4)

Das erfindungsgemäße Verfahren weist eine hohe Ausbeute, also eine hohe Teerreinigungsrate auf, vorzugsweise im Bereich von 60 - 100%. Ferner sind die Katalysatoren hochtemperaturstabil (bis zu 1000°C); deshalb kann das Verfahren direkt nach der Vergasung ohne Abkühlung des Synthesegases eingesetzt werden. Aufgrund der hohen Aktivität der Katalysatoren kann das erfindungsgemäße Verfahren auch bei niedrigerem Temperaturniveau betrieben werden. Das Verfahren wird bevorzugt bei 500 - 1000°C, besonders bevorzugt bei 600°C - 800 °C und ganz besonders bevorzugt bei 650°C - 850°C durchgeführt. Beim erfindungsgemäßen Verfahren werden vorzugsweise Raumgeschwindigkeiten (totale (feuchte) RG) von 1000 bis 10000 Volumenstrom/Volumen Kat. angewendet, noch bevorzugter im Bereich von 3000 bis 6000 und besonders bevorzugt von 2000 bis 5000.

Gegenstand der Erfindung ist des Weiteren ein Verfahren zur Herstellung von im Teergehalt verringerten Synthesegas unter Verwendung eines wie vorstehend beschriebenen edelmetallhaltigen Katalysators, wobei vor der Verwendung des edelmetallhaltigen Katalysators keine Verwendung eines Katalysators auf Zirkoniumbasis erfolgt ist.

Die Erfindung wird durch die nachfolgenden Beispiele näher beschrieben, ohne dass sie durch diese begrenzt werden soll:

### Herstellungsbeispiel 1 (Trägermaterial):

Es wird ein Mischoxid-Pulver bestehend aus 3% La₂O₃, 17% CeO₂, und 80% Al₂O₃, bezogen auf Gew. %, in DEMI-H₂O suspendiert, anschließend 10min gerührt und auf einen pH-Wert von 4,5 mit 99 % Essigsäure eingestellt. Die Suspension wird auf einen Feststoffgehalt von ca. 40% eingestellt. Die Suspension wird gerührt und mehrfach in einer Dyna-Mill Kugelmühle gemahlen, bis eine Korngrössenzusammensetzung von d50 < 10 µm erreicht wird.

### Herstellungsbeispiel 2 (Katalysator, nicht gemäß der Erfindung):

Ein zylindrischer Wabenkörper aus Cordierite mit 400 cpsi (cells per square inch) Querschnittsfläche wird mehrfach in die Suspension aus Herstellungsbeispiel 1 eingetaucht, ausgeblasen bei 120°C getrocknet und anschließend 3 h bei 850°C an Luft kalciniert, bis der Wabenkörper eine Beladung von 100 g Mischoxid pro Liter Wabenvolumen aufweist. Der beschichtete Katalysatorträger wird anschließend in eine wässrige Lösung von Rh(NO₃)₃ eingetaucht. Der mit der Edelmetallsalzlösung getränkte Wabenkörper wird getrocknet und bei 550°C an Luft kalziniert. Der Tränkvorgang wird so vorgenommen, dass der Katalysatorträger je Liter Wabenvolumen 1 g Rhodium aufnimmt.

### Herstellungsbeispiel 3 (Katalysator, nicht gemäß der Erfindung):

Ein zylindrischer Wabenkörper aus Cordierite mit 400 cpsi (cells per square inch) Querschnittsfläche wird mehrfach in die Suspension aus Herstellungsbeispiel 1 eingetaucht, ausgeblasen bei 120°C getrocknet und anschließend 3 h bei 850°C an Luft kalciniert, bis der Wabenkörper eine Beladung von 100 g Mischoxid pro Liter Wabenvolumen aufweist. Der beschichtete Katalysatorträger wird anschließend in eine wässrige Lösung von Rh(NO₃)₃ eingetaucht. Der mit der Edelmetallsalzlösung getränkte Wabenkörper wird getrocknet und bei 550°C an Luft kalziniert. Der Tränkvorgang wird so vorgenommen und eventuell mehrfach wiederholt, dass der Katalysatorträger je Liter Wabenvolumen 2 g Rhodium aufnimmt.

### Herstellungsbeispiel 4 (Katalysator, nicht gemäß der Erfindung):

Ein zylindrischer Wabenkörper aus Cordierite mit 400 cpsi (cells per square inch) Querschnittsfläche wird mehrfach in die Suspension aus Herstellungsbeispiel 1 eingetaucht, ausgeblasen bei 120°C getrocknet und anschließend 3 h bei 850°C an Luft kalciniert, bis der Wabenkörper eine Beladung von 100 g Mischoxid pro Liter Wabenvolumen aufweist. Der beschichtete Katalysatorträger wird anschließend in eine wässrige Lösung von Rh(NO₃)₃ eingetaucht. Der mit der Edelmetallsalzlösung getränkte Wabenkörper wird getrocknet und bei 550°C an Luft kalziniert. Der Tränkvorgang wird so vorgenommen und eventuell mehrfach wiederholt, dass der Katalysatorträger je Liter Wabenvolumen 4 g Rhodium aufnimmt.

### Herstellungsbeispiel 5 (Katalysator):

Ein zylindrischer Wabenkörper aus Cordierite mit 400 cpsi (cells per square inch) Querschnittsfläche wird mehrfach in die Suspension aus Herstellungsbeispiel 1 eingetaucht, ausgeblasen bei 120°C getrocknet und anschließend 3 h bei 850°C an Luft kalciniert, bis der Wabenkörper eine Beladung von 100 g Mischoxid pro Liter Wabenvolumen aufweist. Der beschichtete Katalysatorträger wird anschließend in eine wässrige Lösung von Ir(OAc)ₓ eingetaucht. Der mit der Edelmetallsalzlösung getränkte Wabenkörper wird getrocknet und bei 550°C an Luft kalziniert. Der Tränkvorgang wird so vorgenommen und eventuell mehrfach wiederholt, dass der Katalysatorträger je Liter Wabenvolumen 2 g Iridium aufnimmt.

### Herstellungsbeispiel 6 (Katalysator, nicht gemäß der Erfindung):

Ein zylindrischer Wabenkörper aus Cordierite mit 400 cpsi (cells per square inch) Querschnittsfläche wird mehrfach in die Suspension aus Herstellungsbeispiel 1 eingetaucht, ausgeblasen bei 120°C getrocknet und anschließend 3 h bei 850°C an Luft kalciniert, bis der Wabenkörper eine Beladung von 100 g Mischoxid pro Liter Wabenvolumen aufweist. Der beschichtete Katalysatorträger wird anschließend in eine wässrige Lösung von [Pt(NH₃)₄](OH)₂ eingetaucht. Der mit der Edelmetallsalzlösung getränkte Wabenkörper wird getrocknet und bei 550°C an Luft kalziniert. Der Tränkvorgang wird so vorgenommen, dass der Katalysatorträger je Liter Wabenvolumen 1 g Platin aufnimmt.

### Herstellungsbeispiel 7 (Katalysator, nicht gemäß der Erfindung):

Ein zylindrischer Wabenkörper aus Cordierite mit 400 cpsi (cells per square inch) Querschnittsfläche wird mehrfach in die Suspension aus Herstellungsbeispiel 1 eingetaucht, ausgeblasen bei 120°C getrocknet und anschließend 3 h bei 850°C an Luft kalciniert, bis der Wabenkörper eine Beladung von 100 g Mischoxid pro Liter Wabenvolumen aufweist. Der beschichtete Katalysatorträger wird anschließend in eine wässrige Lösung von [Pt(NH₃)₄](OH)₂ eingetaucht. Der mit der Edelmetallsalzlösung getränkte Wabenkörper wird getrocknet und bei 550°C an Luft kalziniert. Der Tränkvorgang wird so vorgenommen und eventuell mehrfach wiederholt, dass der Katalysatorträger je Liter Wabenvolumen 2 g Platin aufnimmt.

### Herstellungsbeispiel 8 (Katalysator):

Ein zylindrischer Wabenkörper aus Cordierite mit 400 cpsi (cells per square inch) Querschnittsfläche wird mehrfach in die Suspension aus Herstellungsbeispiel 1 eingetaucht, ausgeblasen bei 120°C getrocknet und anschließend 3 h bei 850°C an Luft kalciniert, bis der Wabenkörper eine Beladung von 100 g Mischoxid pro Liter Wabenvolumen aufweist. Der beschichtete Katalysatorträger wird anschließend in eine wässrige Lösung von Rh(NO₃)₃ eingetaucht. Der mit der Edelmetallsalzlösung getränkte Wabenkörper wird getrocknet und bei 550°C an Luft kalziniert. Der Tränkvorgang wird so vorgenommen, dass der Katalysatorträger je Liter Wabenvolumen 0,5 g Rhodium aufnimmt. Der beschichtete Katalysatorträger wird anschließend in eine wässrige Lösung von [Pt(NH₃)₄](OH)₂ eingetaucht. Der mit der Edelmetallsalzlösung getränkte Wabenkörper wird getrocknet und bei 550°C an Luft kalziniert. Der Tränkvorgang wird so vorgenommen und eventuell mehrfach wiederholt, dass der Katalysatorträger je Liter Wabenvolumen 1 g Platin aufnimmt. Die Endkonzentration an Edelmetallen beträgt 0,5 g/L Rh und 1 g/L Pt.

### Herstellungsbeispiel 9 (Katalysator):

Ein zylindrischer Wabenkörper aus Cordierite mit 400 cpsi (cells per square inch) Querschnittsfläche wird mehrfach in die Suspension aus Herstellungsbeispiel 1 eingetaucht, ausgeblasen bei 120°C getrocknet und anschließend 3 h bei 850°C an Luft kalciniert, bis der Wabenkörper eine Beladung von 100 g Mischoxid pro Liter Wabenvolumen aufweist. Der beschichtete Katalysatorträger wird anschließend in eine wässrige Lösung von Rh(NO₃)₃ eingetaucht. Der mit der Edelmetallsalzlösung getränkte Wabenkörper wird getrocknet und bei 550°C an Luft kalziniert. Der Tränkvorgang wird so vorgenommen, dass der Katalysatorträger je Liter Wabenvolumen 0,5 g Rhodium aufnimmt. Der beschichtete Katalysatorträger wird anschließend in eine wässrige Lösung von [Pt(NH₃)₄](OH)₂ eingetaucht. Der mit der Edelmetallsalzlösung getränkte Wabenkörper wird getrocknet und bei 550°C an Luft kalziniert. Der Tränkvorgang wird so vorgenommen und eventuell mehrfach wiederholt, dass der Katalysatorträger je Liter Wabenvolumen 2 g Platin aufnimmt. Die Endkonzentration an Edelmetallen beträgt 0,5 g/L Rh und 2 g/L Pt.

### Herstellungsbeispiel 10 (Katalysator):

Ein zylindrischer Wabenkörper aus Cordierite mit 400 cpsi (cells per square inch) Querschnittsfläche wird mehrfach in die Suspension aus Herstellungsbeispiel 1 eingetaucht, ausgeblasen bei 120°C getrocknet und anschließend 3 h bei 850°C an Luft kalciniert, bis der Wabenkörper eine Beladung von 100 g Mischoxid pro Liter Wabenvolumen aufweist. Der beschichtete Katalysatorträger wird anschließend in eine wässrige Lösung von Rh(NO₃)₃ eingetaucht. Der mit der Edelmetallsalzlösung getränkte Wabenkörper wird getrocknet und bei 550°C an Luft kalziniert. Der Tränkvorgang wird so vorgenommen, dass der Katalysatorträger je Liter Wabenvolumen 1 g Rhodium aufnimmt. Der beschichtete Katalysatorträger wird anschließend in eine wässrige Lösung von [Pt(NH₃)₄](OH)₂ eingetaucht. Der mit der Edelmetallsalzlösung getränkte Wabenkörper wird getrocknet und bei 550°C an Luft kalziniert. Der Tränkvorgang wird so vorgenommen und eventuell mehrfach wiederholt, dass der Katalysatorträger je Liter Wabenvolumen 4 g Platin aufnimmt. Die Endkonzentration an Edelmetallen beträgt 1 g/L Rh und 4 g/L Pt.

### Herstellungsbeispiel 11 (Katalysator, nicht gemäß der Erfindung):

Ein zylindrischer Wabenkörper aus Cordierite mit 400 cpsi (cells per square inch) Querschnittsfläche wird mehrfach in die Suspension aus Herstellungsbeispiel 1 eingetaucht, ausgeblasen bei 120°C getrocknet und anschließend 3 h bei 850°C an Luft kalciniert, bis der Wabenkörper eine Beladung von 100 g Mischoxid pro Liter Wabenvolumen aufweist. Der beschichtete Katalysatorträger wird anschließend in eine wässrige Lösung von Ni(NO₃)₂ eingetaucht. Der mit der Metallsalzlösung getränkte Wabenkörper wird getrocknet und bei 550°C an Luft kalziniert. Der Tränkvorgang wird so vorgenommen und eventuell mehrfach wiederholt, dass der Katalysatorträger je Liter Wabenvolumen 10 g Nickel aufnimmt.

### Herstellungsbeispiel 12 (Katalysator, nicht gemäß der Erfindung):

Ein zylindrischer Wabenkörper aus Cordierite mit 400 cpsi (cells per square inch) Querschnittsfläche wird mehrfach in die Suspension aus Herstellungsbeispiel 1 eingetaucht, ausgeblasen bei 120°C getrocknet und anschließend 3 h bei 850°C an Luft kalciniert, bis der Wabenkörper eine Beladung von 100 g Mischoxid pro Liter Wabenvolumen aufweist. Der beschichtete Katalysatorträger wird anschließend in eine wässrige Lösung von Ni(NO₃)₂ eingetaucht. Der mit der Metallsalzlösung getränkte Wabenkörper wird getrocknet und bei 550°C an Luft kalziniert. Der Tränkvorgang wird so vorgenommen und eventuell mehrfach wiederholt, dass der Katalysatorträger je Liter Wabenvolumen 10 g Nickel aufnimmt. Der beschichtete Katalysatorträger wird anschließend in eine wässrige Lösung von Rh(NO₃)₃ eingetaucht. Der mit der Edelmetallsalzlösung getränkte Wabenkörper wird getrocknet und bei 550°C an Luft kalziniert. Der Tränkvorgang wird so vorgenommen, dass der Katalysatorträger je Liter Wabenvolumen 0,1 g Rhodium aufnimmt.

## Patentansprüche

1. Verfahren zur Verringerung des Teergehalts in Gasen aus einem Vergasungsprozess aus kohlenstoffhaltigen Ausgangsmaterialien, umfassend das Kontaktieren mindestens eines Teils des aus einem Vergasungsprozess erhaltenen Gases mit einem edelmetallhaltigen Katalysator, wobei der edelmetallhaltige Katalysator wenigstens ein Edelmetall, ausgewählt aus der Gruppe, bestehend aus Pt, Rh und Ir, umfasst, unter der Bedingung, dass im Falle von Pt dieses in Kombination mit Rh oder Ni verwendet wird, dass im Falle von Rh dieses in Kombination mit einem weiteren Edelmetall verwendet wird, und dass im Falle von Ir dieses in Kombination mit dem Promotor Ceroxid verwendet wird, und wobei das aus einem Vergasungsprozess erhaltene Gas vor dem Inkontaktbringen mit dem edelmetallhaltigen Katalysator nicht mit einem Katalysator auf Zirkoniumbasis in Kontakt gebracht wird.

2. Verfahren nach Anspruch 1, **dadurch gekennzeichnet, dass** der edelmetallhaltige Katalysator auf einem Träger aufgebracht ist oder als Schüttgutkatalysator vorliegt.

3. Verfahren nach Anspruch 2, **dadurch gekennzeichnet, dass** der Träger in Form einer Wabe vorliegt.

4. Verfahren nach einem der Ansprüche 2 oder 3, **dadurch gekennzeichnet, dass** der Träger Ceroxid (CeOₓ), Lanthanoxid (La₂O₃), Aluminiumoxid (Al₂O₃), Yttriumoxid (Y₂O₃), Titanoxid (TiO₂), Zirkonoxid (ZrO₂), Siliciumoxid (SiO₂) oder Mischungen davon umfasst.

5. Verfahren nach einem der vorangehenden Ansprüche, **dadurch gekennzeichnet, dass** das Kontaktieren mit dem edelmetallhaltigen Katalysator direkt im Vergasungsreaktor oder in einem externen Reaktor stattfindet.

6. Verfahren nach einem der vorangehenden Ansprüche, **dadurch gekennzeichnet, dass** der Teer Mischungen zyklischer und polyzyklischer Aromaten umfasst, bevorzugt mit einem Molekulargewicht von mehr als etwa 78 g/mol.

7. Verfahren nach einem der vorangehenden Ansprüche, **dadurch gekennzeichnet, dass** der Vergasungsprozess ein Biomasse-Vergasungsprozess ist.

## Claims

1. Method of reducing the tar content in gases from a gasification process using carbon-containing starting materials, comprising contacting at least part of the gas obtained from a gasification process with a noble metal-containing catalyst, wherein the noble metal-containing catalyst comprises at least one noble metal selected from the group consisting of Pt, Rh and Ir, with the proviso that in the case of Pt it is used in combination with Rh or Ni, that in the case of Rh it is used in combination with a further noble metal, and that in the case of Ir it is used in combination with the promoter cerium oxide, and wherein the gas obtained from a gasification process is not brought into contact with a catalyst based on zirconium before it is contacted with the noble metal-containing catalyst.

2. Method according to Claim 1, **characterized in that** the noble metal-containing catalyst has been applied to a support or is present as particulate catalyst.

3. Method according to Claim 2, **characterized in that** the support is present in the form of a honeycomb.

4. Method according to either of Claims 2 and 3, **characterized in that** the support comprises cerium oxide (CeOₓ), lanthanum oxide (La₂O₃), aluminium oxide (Al₂O₃), yttrium oxide (Y₂O₃), titanium oxide (TiO₂), zirconium oxide (ZrO₂), silicon oxide (SiO₂) or mixtures thereof.

5. Method according to any of the preceding claims, **characterized in that** the contacting with the noble metal-containing catalyst takes place directly in the gasification reactor or in an external reactor.

6. Method according to any of the preceding claims, **characterized in that** the tar comprises mixtures of cyclic and polycyclic aromatics, preferably having a molecular weight of more than about 78 g/mol.

7. Method according to any of the preceding claims, **characterized in that** the gasification process is a biomass gasification process.

## Revendications

1. Procédé de réduction de la teneur en goudron de gaz issus d'un procédé de gazéification de matériaux de départ contenant du carbone, comprenant la mise en contact d'au moins une partie du gaz obtenu à partir d'un procédé de gazéification avec un catalyseur contenant des métaux nobles, le catalyseur contenant des métaux nobles comprenant au moins un métal noble choisi dans le groupe constitué par Pt, Rh et Ir, à condition qu'en cas de Pt, celui-ci soit utilisé en combinaison avec Rh ou Ni, qu'en cas de Rh, celui-ci soit utilisé en combinaison avec un autre métal noble, et qu'en cas d'Ir, celui-ci soit utilisé en combinaison avec le promoteur oxyde de cérium, et le gaz obtenu à partir d'un procédé de gazéification n'étant pas mis en contact avec un catalyseur à base de zirconium avant la mise en contact avec le catalyseur contenant des métaux nobles.

2. Procédé selon la revendication 1, **caractérisé en ce que** le catalyseur contenant des métaux nobles est appliqué sur un support ou se présente sous la forme d'un catalyseur en vrac.

3. Procédé selon la revendication 2, **caractérisé en ce que** le support se présente sous la forme d'un nid d'abeilles.

4. Procédé selon l'une quelconque des revendications 2 ou 3, **caractérisé en ce que** le support comprend de l'oxyde de cérium (CeOₓ), de l'oxyde de lanthane (La₂O₃), de l'oxyde d'aluminium (Al₂O₃), de l'oxyde d'yttrium (Y₂O₃), de l'oxyde de titane (TiO₂), de l'oxyde de zirconium (ZrO₂), de l'oxyde de silicium (SiO₂) ou des mélanges de ceux-ci.

5. Procédé selon l'une quelconque des revendications précédentes, **caractérisé en ce que** la mise en contact avec le catalyseur contenant des métaux nobles a lieu directement dans le réacteur de gazéification ou dans un réacteur externe.

6. Procédé selon l'une quelconque des revendications précédentes, **caractérisé en ce que** le goudron comprend des mélanges de composés aromatiques cycliques et polycycliques, de préférence ayant un poids moléculaire supérieur à environ 78 g/mol.

7. Procédé selon l'une quelconque des revendications précédentes, **caractérisé en ce que** le procédé de gazéification est un procédé de gazéification d'une biomasse.
